# EUROPEAN PATENT SPECIFICATION

(11) **EP 3 779 964 B1**
(45) Date of publication and mention of the grant of the patent: **03.09.2025**
(21) Application number: 19834166.1
(22) Date of filing: 18.04.2019
(51) Int. Cl.: G10L 15/22, G10L 15/07, G10L 15/08, G10L 15/183, G10L 15/16

(54) **ELECTRONIC DEVICE FOR GENERATING PERSONALIZED ASR MODEL AND METHOD FOR OPERATING SAME**
ELEKTRONISCHE VORRICHTUNG ZUR ERZEUGUNG EINES PERSONALISIERTEN ASR-MODELLS UND VERFAHREN ZU DESSEN BETRIEB
DISPOSITIF ÉLECTRONIQUE POUR GÉNÉRER UN MODÈLE ASR PERSONNALISÉ ET SON PROCÉDÉ DE FONCTIONNEMENT

(30) Priority: 13.07.2018 KR 20180081676
(43) Date of publication of application: 17.02.2021
(73) Proprietor: Samsung Electronics Co., Ltd., Gyeonggi-do 16677 (KR)
(72) Inventor: KIM, Sumyeon, Suwon-si Gyeonggi-do 16677 (KR); PARK, Sangyeon, Suwon-si Gyeonggi-do 16677 (KR); PARK, Sungpa, Suwon-si Gyeonggi-do 16677 (KR)
(74) Representative: Arnold & Siedsma
(86) International application number: PCT/KR2019/004695
(87) International publication number: WO 2020/013428

(56) References cited:
- KR-A- 20140 005 639
- KR-A- 20140 005 639
- KR-A- 20140 092 960
- KR-A- 20180 062 003
- KR-B1- 101 131 278
- US-A1- 2007 208 567
- US-B2- 9 454 966
- US-B2- 9 454 966

## Description

### Technical Field

The disclosure relates to an electronic device configured to analyze a user utterance and to produce a personalized ASR model using the result of the analysis and to a method of operating such electronic device.

### Background Art

An artificial intelligence system is a computer system that implements human-level intelligence, and improves its awareness as a machine performs self-learning, determination, and uses itself.

Artificial intelligence technology may include machine learning (deep learning) technology which uses an algorithm that classifies/learns the features of input data by itself, and element technologies which mimic functions of a human brain, such as cognition, determination, and the like, using the machine learning technology.

The element technologies may include, for example, at least one from among linguistic understanding technology that recognizes human languages/characters, visual understanding technology that recognizes objects in the manner of human vision, inferring/predicting technology that performs logical inferring and prediction by estimating information, knowledge expression technology that processes human experience information to be knowledge data, and operation control technology that controls autonomous vehicle driving and robot movement.

The linguistic understanding technology is a technology that recognizes human languages/characters and applies/processes the same, and may include natural language processing, machine translation, conversation system, question and answer, speech recognition/synthesis and the like.

As an example of the linguistic understanding technology, as disclosed in US2007/208567 A1, KR10-2014-0005639 A and US 9,454,966, respectively, an ASR module recognizes a user utterance using an ASR model, produced by training based on a machine learning technology, and may produce text data corresponding to the utterance.

### Disclosure of Invention

### Technical Problem

In association with text data that an ASR module produces via speech recognition, a user can directly correct an erroneously recognized part. For example, an electronic device may display text data, produced via speech recognition, via a user interface (UI), and may receive a reaction thereto from a user. If the user reaction means that an erroneous recognition is present, the electronic device may display a UI via which the user is capable of inputting text for replacing the erroneous part. As described above, a method which receives feedback associated with an erroneous part from a user may require an additional operation from the user, and if the additional operation is not performed, a user utterance may be repeatedly erroneously recognized. The repetitive ASR error may cause an inconvenience for users when the users use voice commands.

According to various embodiments of the disclosure, the electronic device may reduce errors in recognition of utterance, so as to increase accuracy of voice-based electronic device control, and to reduce inconvenience for users.

### Solution to Problem

In accordance with an aspect of the disclosure, an electronic device as claimed in claim 1 is provided.

In accordance with an aspect of the disclosure, a method of operating an electronic device as claimed in claim 9 is provided. Advantageous Effects of Invention

According to various embodiments of the disclosure, an electronic device produces a personalized ASR model for a user by analyzing a user utterance, and performs speech recognition using the same, and thus, may reduce errors in utterance recognition, and may decrease an inconvenience for users.

### Brief Description of Drawings

FIG. 1 illustrates an electronic device within a network environment according to various embodiments;
FIG. 2 is a block diagram of a program module according to various embodiments;
FIG. 3 is a diagram illustrating a system which is configured to operate personalized automatic speech recognition (ASR) according to various embodiments of the disclosure;
FIG. 4 is a flowchart illustrating operations for operating a personalized ASR according to various embodiments of the disclosure;
FIG. 5 is a flowchart illustrating operations for analyzing a speech recognition result according to various embodiments of the disclosure;
FIG. 6 is a diagram illustrating a user interface (UI) for receiving a user reaction to an ASR error analysis result according to various embodiments of the disclosure;
FIG. 7 is a diagram illustrating a user interface (UI) for receiving a user reaction to an ASR error analysis result according to various embodiments of the disclosure; and
FIG. 8 is a diagram illustrating a user interface (UI) for receiving a user reaction to an ASR error analysis result according to various embodiments of the disclosure.

### Description of embodiments

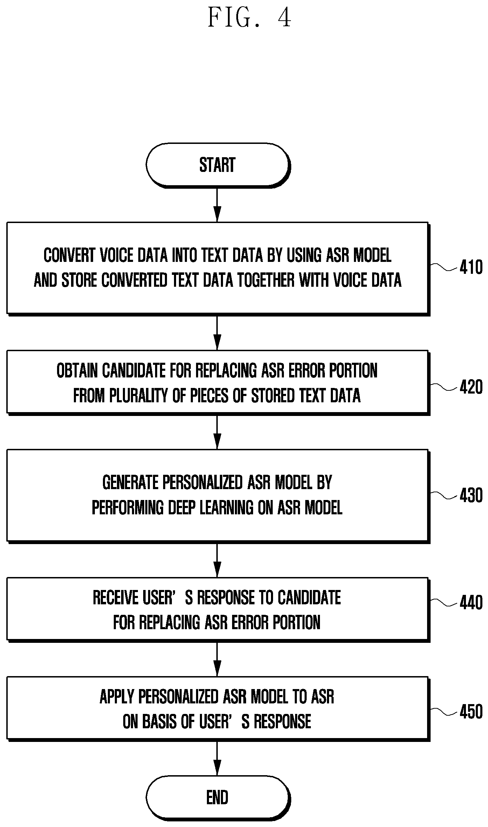

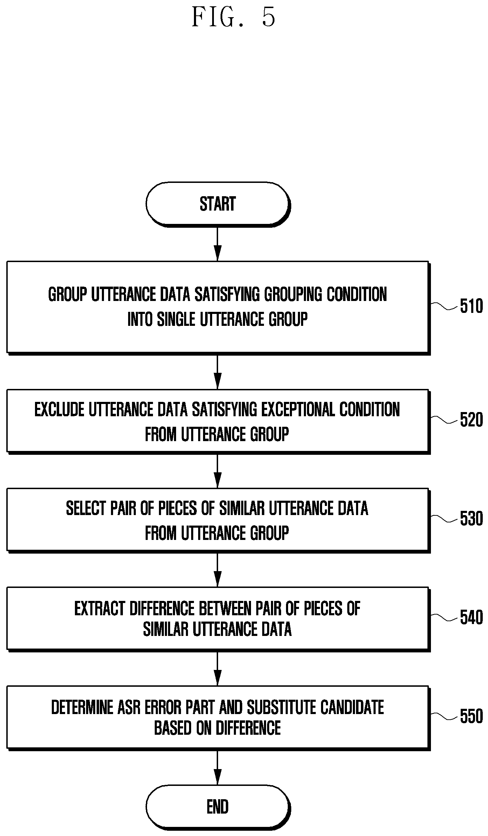

The description of the embodiments illustrated in figures 4 and 5 is according to the claimed invention, whereas other parts of the description are for illustrative purposes only.

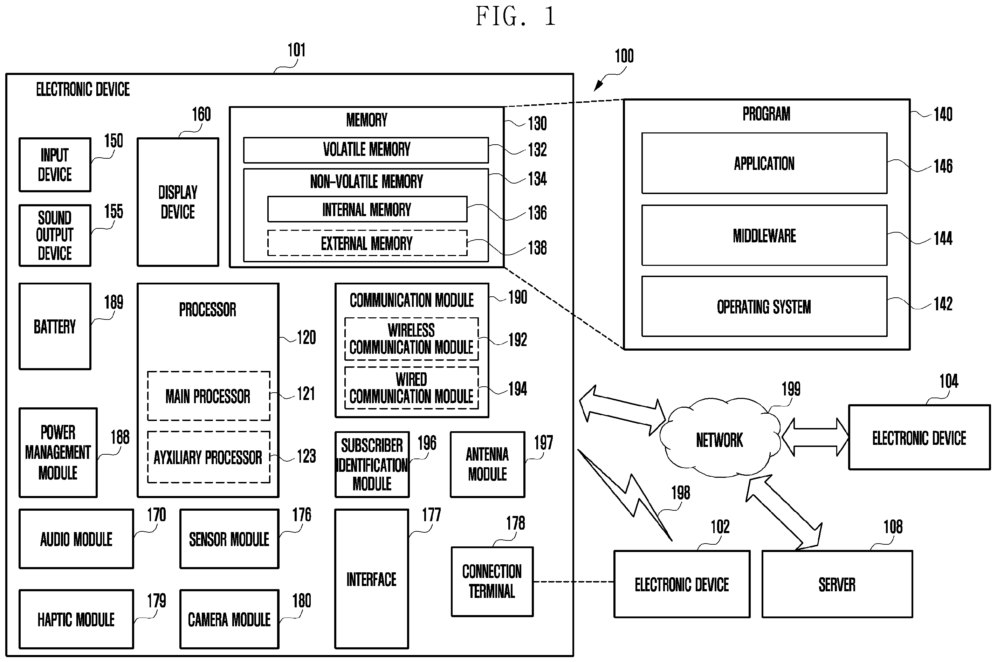

Fig. 1 is a block diagram illustrating an electronic device 101 in a network environment 100 according to various embodiments. Referring to Fig. 1, the electronic device 101 in the network environment 100 may communicate with an electronic device 102 via a first network 198 (e.g., a short-range wireless communication network), or an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input device 150, a sound output device 155, a display device 160, an audio module 170, a sensor module 176, an interface 177, a haptic module 179, a camera module 180, a power management module 188, a battery 189, a communication module 190, a subscriber identification module(SIM) 196, or an antenna module 197. In some embodiments, at least one (e.g., the display device 160 or the camera module 180) of the components may be omitted from the electronic device 101, or one or more other components may be added in the electronic device 101. In some embodiments, some of the components may be implemented as single integrated circuitry. For example, the sensor module 176 (e.g., a fingerprint sensor, an iris sensor, or an illuminance sensor) may be implemented as embedded in the display device 160 (e.g., a display).

The processor 120 may execute, for example, software (e.g., a program 140) to control at least one other component (e.g., a hardware or software component) of the electronic device 101 coupled with the processor 120, and may perform various data processing or computation. According to one embodiment, as at least part of the data processing or computation, the processor 120 may load a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), and an auxiliary processor 123 (e.g., a graphics processing unit (GPU), an image signal processor (ISP), a sensor hub processor, or a communication processor (CP)) that is operable independently from, or in conjunction with, the main processor 121. Additionally or alternatively, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display device 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123.

The memory 130 may store various data used by at least one component (e.g., the processor 120 or the sensor module 176) of the electronic device 101. The various data may include, for example, software (e.g., the program 140) and input data or output data for a command related thererto. The memory 130 may include the volatile memory 132 or the non-volatile memory 134.

The program 140may be stored in the memory 130 as software, and may include, for example, an operating system (OS) 142, middleware 144, or an application 146.

The input device 150 may receive commands or data to be used in an element (e.g., the processor 120) of the electronic device 101 from the outside of the electronic device 101 (e.g., a user). The input device 150 may include, for example, a microphone, a mouse, or a keyboard.

The sound output device 155 may output sound signals to the outside of the electronic device 101. The sound output device 155 may include, for example, a speaker or a receiver. The speaker may be used for general purposes, such as playing multimedia or playing record, and the receiver may be used for an incoming calls. According to an embodiment, the receiver may be implemented as separate from, or as part of the speaker.

The display device 160 may visually provide information to the outside (e.g., a user) of the electronic device 101. The display device 160 may include, for example, a display, a hologram device, or a projector and control circuitry to control a corresponding one of the display, hologram device, and projector. According to an embodiment, the display device 160 may include touch circuitry adapted to detect a touch, or sensor circuitry (e.g., a pressure sensor) adapted to measure the intensity of force incurred by the touch.

The audio module 170 may convert a sound into an electrical signal and vice versa. According to an embodiment, the audio module 170 may obtain the sound via the input device 150, or output the sound via the sound output device 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, a HDMI connector, a USB connector, a SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to one embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a cellular network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The antenna module 197 may transmit signals or power to the outside (e.g., an external electronic device), or may receive the same from the outside. According to an embodiment, the antenna module may be implemented by an electric conductor or a conductive pattern. According to an embodiment, the antenna module may further include another component (e.g., an RFIC) in addition to an electric conductor or a conductive pattern. According to an embodiment, the antenna module 197 may include one or more antennas. Among them, at least one antenna appropriate for a communication scheme that is used in a communication network, such as the first network 198 or the second network 199, may be selected by, for example, the communication module 190. Transmission or reception of signals or power may be performed between the communication module 190 and an external electronic device via the at least one selected antenna.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 and 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, or client-server computing technology may be used, for example.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things, unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of, or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," "coupled to," "connected with," or "connected to" another element (e.g., a second element), it means that the element may be coupled with the other element directly (e.g., wiredly), wirelessly, or via a third element.

As used herein, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101) . For example, a processor(e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a complier or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between where data is semi-permanently stored in the storage medium and where the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

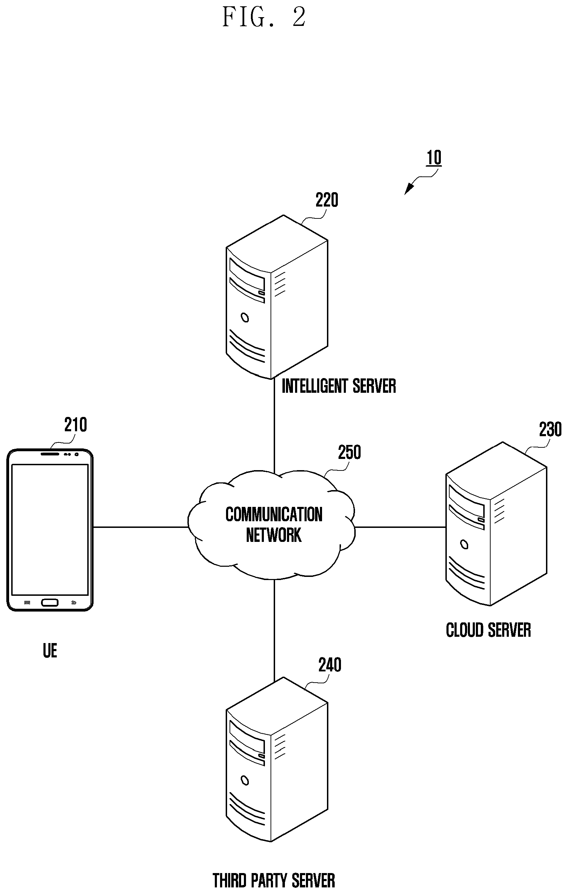

FIG. 2 is a diagram illustrating an integrated intelligent system according to various embodiments of the disclosure. Referring to FIG. 2, an integrated intelligent system 10 may include a user equipment (UE) 210 (e.g., the electronic device 101 of FIG. 1), an intelligent server 220 (e.g., the server 108 of FIG. 1), a cloud server 230 or a third party server 240.

According to various embodiments of the disclosure, the UE 210 may provide services that users need, via apps (or application programs) (e.g., an alarm app, a message app, a picture (gallery) app, and the like) stored in the UE 210. For example, the UE 210 may perform another app via an intelligent app (or a speech recognition app) stored in the UE 210. The UE 210 may receive a user input for executing the other app using the intelligent app. The user input may be received via, for example, a physical button, a touch pad, a voice input, a remote input, and the like. According to an embodiment, the UE 210 may correspond to a terminal device (or an electronic device) capable of connecting to the Internet, such as a portable phone, a smart phone, a personal digital assistant (PDA), a notebook computer, or the like.

According to various embodiments of the disclosure, the UE 210 may receive a user utterance as a user input. The UE 210 may receive a user utterance, and may produce a command to execute an app based on the user utterance. Accordingly, the UE 210 may execute the app using the command.

According to various embodiments of the disclosure, the UE 210 may produce speech data corresponding to the user utterance, and may transmit the speech data to the intelligent server 320.

According to various embodiments of the disclosure, the UE 210 may pre-process the speech data before transmitting the speech data to the intelligent server 220. For example, the UE 210 may perform a speech pre-processing operation, including an operation of removing echos included in the speech data, an operation of removing background noise included in the speech data, and an operation of adjusting the volume of speech included in the speech data, and may transmit the pre-processed speech data to the intelligent server 220.

According to various embodiments of the disclosure, the intelligent server 220 may perform an operation of converting speech data received from the UE 100 via a communication network 250 (e.g., the network 199 of FIG. 1) into text data. For example, the intelligent server 220 may perform a conversion-to-text operation using an acoustic model (AM) and a language model (LM) learned by the machine learning technology and stored in the intelligent server 220.

According to various embodiments of the disclosure, the intelligent server 220 may transmit the converted text data to the UE 210 and/or cloud server 230 via the communication network 250. The UE 210 may output the received text data on a display.

According to various embodiments of the disclosure, the cloud server 230 may perform natural language understanding (NLU) processing on the text data received from the intelligent server 220. The NLU processing may be an operation of recognizing the intention of user utterance based on the text data. For example, the cloud server 230 may perform syntactic analysis (syntactic analyze) or semantic analysis (semantic analyze) on the text data, so as to recognize a user intention.

According to various embodiments of the disclosure, the cloud server 230 may identify a user intention determined via NLU, may identify an operation appropriate for the user intention, and may identify information associated with parameters needed for performing the operation corresponding to the user intention. If a parameter needed for performing the operation corresponding to the user intention is insufficient, the cloud server 230 may request a parameter from the UE 210.

According to various embodiments of the disclosure, the cloud server 230 may transmit information associated with the operation, the parameter, and an application that is to perform the operation, to the UE 210. The UE 210 may select an application based on the information, and may run the selected application so as to perform an operation according to the user input (command).

According to various embodiments of the disclosure, the cloud server 230 may perform the operation corresponding to the user intention using the parameter, and may transmit the result thereof to the UE 210.

According to various embodiments of the disclosure, the cloud server 230 may transmit, to the third party server 240, a signal that requests execution of the operation corresponding to the user intention. The third party server 240 may be a server that is operated by a subject different from a subject that operates the intelligent server 220 and the cloud server 230. The third party server 240 performs the operation corresponding to the user intention (e.g., ordering a pizza), and may transmit the result thereof to the UE 210.

According to various embodiments of the disclosure, at least one (recognizing a user intention) of the operations performed by the cloud server 230 may be performed by the intelligent server 220.

According to various embodiments, at least one (e.g., conversion to text) of the operations performed by the intelligent server 220 and/or at least one of the operations performed by the cloud server 230 may be performed by the UE 210.

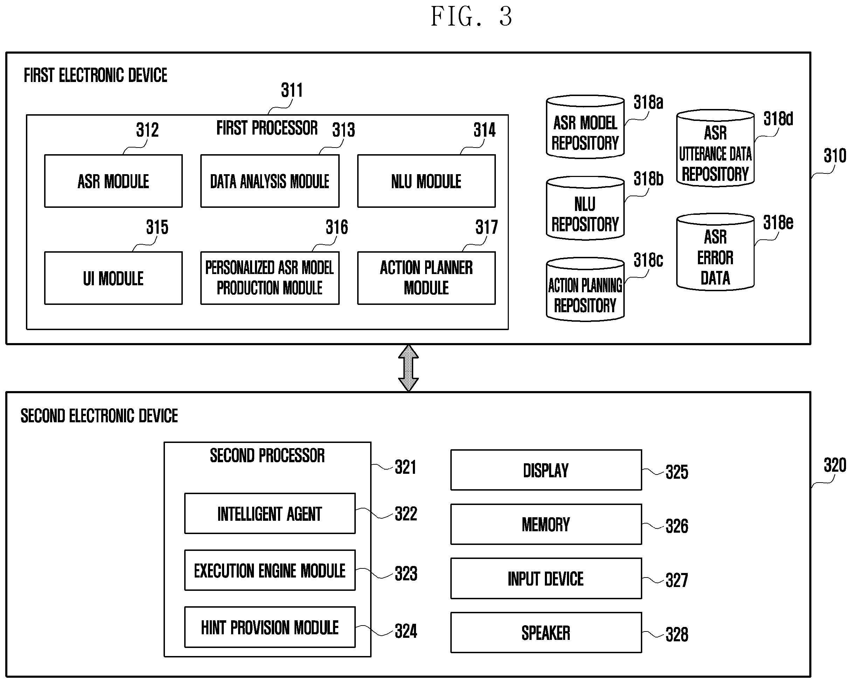

FIG. 3 is a diagram illustrating a system, configured to operate personalized automatic speech recognition (ASR), according to various embodiments of the disclosure.

Referring to FIG. 3, a first electronic device 310 (e.g., the server 108 of FIG. 1) may include a server (e.g., at least one of the intelligent server 220 of FIG. 2 or the cloud server 230) to implement an integrated intelligent system (e.g., the integrated intelligent system 10 of FIG. 2), and may perform data communication with a second electronic device 320 (e.g., the UE 210) connectable to the integrated intelligent system, may perform management associated with a service and authority providable to the second electronic device 320, and may manage a repository, and the like.

According to various embodiments of the disclosure, the first electronic device 310 may include a first processor 311, an automatic speech recognition (ASR) model repository 318a, an NLU repository 318b, an action planning repository 318c, an ASR utterance data repository 318d, and an ASR error data repository 318e. The first processor 311 may include an ASR module 312, an analysis module 313, an NLU module 314, a user interface (UI) module 315, a personalized ASR model production module 316, and an action planner module 317.

According to various embodiments of the disclosure, at least one of the modules may be separately prepared hardware that is different from the first processor 311 and may be configured in the first electronic device 310.

According to various embodiments of the disclosure, the modules may be software stored in a memory (not illustrated) of the first electronic device 310. Accordingly, the first processor 311 may execute the modules so as to perform operations thereof.

According to various embodiments of the disclosure, the ASR module 312 may perform speech recognition on user speech data received from the second electronic device 320, and may produce text data. For example, the ASR module 312 may convert speech data into text data using an acoustic model and/or a language model. The acoustic model may include information related to an utterance. The language model may include unit phoneme information and information associated with a combination of pieces of unit phoneme information. The acoustic model and the language model may be stored in, for example, the ASR model repository 318a.

According to various embodiments of the disclosure, the ASR utterance data repository 318d may store user utterance data. For example, when utterance data is stored in the ASR utterance data repository 318d by the ASR module 312 as shown in Table 1, identification (ID) may be assigned in order to identify utterance data. Speech data received from the second electronic device 320, text data corresponding to the speech data, and attribute information (i.e., metadata) that describes the speech data may be included. Metadata may include, for example, user information of a corresponding utterance and time information indicating the time at which the speech data is converted into the text data (or the time at which the corresponding utterance is made or the time at which the corresponding utterance data is stored in the ASR utterance data repository 318d). According to an embodiment, the metadata may further include information indicating a location where the corresponding utterance is made. For example, the location information is at least one piece of information among information (e.g., GNSS information, internet protocol (IP), address information, specific place name information, and the like) that the second electronic device 320 collects using, for example, the communication module 190 when the corresponding speech data is produced in the second electronic device 320, and may be received together with the speech data by the first electronic device 310 from the second electronic device 320.

**[Table 1]**

| Utterance ID | Time information | Speech data | USER | Text data (ASR) |
|---|---|---|---|---|
| 1 | 20180109/210930 | 9259164.wav | A | do you watch Star Wars? |
| 2 | 20180109/213007 | 9259167.wav | B | open |
| 3 | 20180110/093130 | 9259168.wav | C | open settings and optimize my phone |
| 4 | 20180110/093155 | 9259170.wav | A | makes me go to main screen unlock my phone |
| 5 | 20180110/200930 | 9259171.wav | B | next music please |
| 6 | 20180110/221005 | 9259172.wav | A | go to main screen and lock my phone |
| 7 | 20180110/221034 | 9259173.wav | A | go to main screen and lock my phone |
| 8 | 20180110/221054 | 9259174.wav | A | Backlight off |

According to various embodiments of the disclosure, the NLU module 314 may perform syntactic analysis (syntactic analyze) or semantic analysis (semantic analyze) on a user input (e.g., text data received from the ASR module 312), so as to understand a user intention. The syntactic analysis is an analysis method that divides a user input into syntactic units (e.g., words, phrases, morphemes, and the like), and understands the syntactic elements of the units obtained by division. The semantic analysis may be performed using semantic matching, rule matching, formula matching, and the like.

According to various embodiments of the disclosure, the NLU module 314 may obtain a domain, an intention (intent), or a parameter (or a slot) needed for expressing the intention, from a user input.

According to an embodiment, the NLU module 314 may determine a user intention and a parameter using a matching rule that is classified based on a domain, an intention (intent), and a parameter (or a slot) needed to recognize the intention. For example, a single domain (e.g., an alarm) may include a plurality of intentions (e.g., setting an alarm, cancelling an alarm, and the like), and a single intention may include a plurality of parameters (e.g., a time, the number of repetitions, an alarm sound, and the like). The plurality of parameters may include, for example, one or more essential element parameters. The matching rule may be stored in a natural language understanding (NLU) repository 318b.

According to an embodiment, the NLU module 314 may understand the meaning of a word extracted from a user input using the linguistic characteristic (e.g., syntactic element) of a morpheme, a phrase, and the like, and may match the meaning of the word with a domain and an intention so as to determine a user intention. For example, the NLU module 314 may calculate how many words, extracted from the user input, are included in each domain and intention, and may determine a user intention. According to an embodiment, the NLU module 314 may determine the parameter of a user input using a word, based on which a user intention is recognized. According to an embodiment, the NLU module 314 may determine a user intention using the NLU repository 318b in which linguistic characteristics used for understanding the intention of a user input are stored. According to another embodiment, the NLU module 314 may determine a user intention using a personal language model (PLM). For example, the NLU module 314 may determine a user intention using personalized information (e.g., a contact information list or a music list). The PLM may be stored in, for example, the ASR model repository 318a. According to an embodiment, as well as the NLU module 314, the ASR module 312 may also recognize a user speech with reference to a PLM stored in the NLU repository 318b.

According to various embodiments of the disclosure, the action planer module 317 may produce action planning which is used for performing a user intention based on the user intention and a parameter understood from a user input. For example, the action planner module 317 may select at least one application to be executed based on a user intention, and may determine at least one action (or operation) to be performed by the at least one selected application. The action planer module 317 may determine a parameter corresponding to the determined operation, and may produce action planning. According to an embodiment, the produced action planning may include information associated with an application, information associated with an operation to be performed in the application, and information associated with a parameter needed for the application to perform the operation. According to an embodiment, if multiple operations need to be performed, the produced action planning may include information associated with an application to perform each operation and information indicating the order of the operations.

According to various embodiments of the disclosure, the action planning may be produced by the NLU module 314.

According to various embodiments of the disclosure, the action planner module 317 may store the produced action planning in the action planning repository 318c.

According to various embodiments of the disclosure, the action planner module 317 may select action planning corresponding to a user input from the action planning repository 318c. For example, the action planner module 317 may select one or more pieces of action planning corresponding to a user intention and a parameter from among pieces of action planning stored in the action planning repository 318c.

According to various embodiments of the disclosure, the data analysis module 313 may determine a text (hereinafter, an ASR error part) estimated to include an error among a plurality of pieces of text data, produced as the result of speech recognition by the ASR module 312, and may determine a text (hereinafter, a substitute candidate) which is to replace the error part and is estimated to correspond to a user intention. According to an embodiment, the data analysis module 313 may extract similar text data from among text data of the same user (e.g., having the same user information) stored in the ASR utterance data repository 318d. The data analysis module 313 may compare extracted text data so as to extract different parts. The data analysis module 313 may determine one of the different parts as an ASR error part and another one of the different part as a substitute candidate, based on attribute information of each piece of the extracted text data. For example, the ASR module 312 may perform speech recognition and may recognize a first utterance of a user, "what's up", as "what's app". A second utterance of the user may be also, "what's up", and the ASR module 312 may perform speech recognition and may recognize the same as "what's up". The data analysis module 313 may determine "what's app", which is recognized via speech recognition performed earlier in time, to be an ASR error part, and may determine "what's up", which is recognized via speech recognition performed later in time, to be a substitute candidate.

According to various embodiments of the disclosure, the ASR error data repository 318e may store an error part (e.g., an ASR error part determined by the data analysis module 313) that the ASR module 312 produces via erroneous speech recognition and a substitute candidate (e.g., a substitute candidate determined by the data analysis module 313) estimated to be an actual utterance of a user, as shown in Table 2. In Table 2, a number contained in a round bracket refers to the number of times that corresponding text data is produced.

**[Table 2]**

| Substitute candidates | Error parts |
|---|---|
| what's up | Whatsapp(144), what set(3), what shop(2), hot soup(1), what's of(1), water(1), auto tap(1), watch app(1), what's happy(1), what's about(1), vot's up(1), what sep(1), worker(1), what's the(1), notes app(1) |
| lock | look(55), log(31), like(11), love(8), lek(1), book(1), lack(1), luck(1), lok(1) |
| snap chat | snapshot(100) |

According to various embodiments of the disclosure, the data analysis module 313 may compare text data, produced when the ASR module 312 performs speech recognition on user speech data, with data in the ASR error data repository 318e, and may identify an ASR error part in the text data. The data analysis module 313 may identify a candidate to replace the ASR error part from the ASR error data repository 318e.

According to various embodiments of the disclosure, the data analysis module 313 may determine an ASR error part and/or substitute candidate, based on a user reaction (feedback) to an operation performed according to the result of speech recognition by the ASR module 312. According to an embodiment, the NLU module 314 may understand a user intention using a substitute candidate determined by the data analysis module 313. The action planer module 317 may produce action planning based on the user intention. The action planning may be transferred to the second electronic device 320 and an operation corresponding thereto may be performed in the second electronic device 320. The user reaction may be negative to the performed operation (e.g., if the user input requires cancellation of the performed operation), the negative user reaction may be transferred to the data analysis module 313, and the data analysis module 313 may exclude the substitute candidate from a group of candidates for replacing an ASR error part. For example, the data analysis module 313 may compare utterance ID #6 and utterance ID #7 in Table 1, and may determine that "log" is an ASR error part and "lock" is a substitute candidate. However, if a user reaction to the utterance ID #7 is negative, the utterance ID #7 may be excluded from a substitute candidate group.

According to various embodiments of the disclosure, the data analysis module 313 may determine an ASR error part and/or substitute candidate, based on a user reaction (feedback) to the result of speech recognition by the ASR module 312. According to an embodiment, as the result of speech recognition by the ASR module 312, text data may be transferred to the second electronic device 320, and may be displayed on the display 325. The second electronic device 320 may perform an operation according to a user input received via an input device 327, and may transfer the information associated with the performed operation to the data analysis module 313. The information transferred to the data analysis module 313 may indicate that the user reaction to the speech recognition result is negative. For example, text data, "go to main screen and lock my phone", corresponding to the utterance ID #7 is transferred to the second electronic device 320, and the operation performed according to the user input may be at least partially irrelevant to the transferred text data. For example, the operation actually performed in the second electronic device 320 according to the user input may be "go to milk music (music reproduction application) and lock the phone". The data analysis module 313 may compare the speech recognition result transferred to the second electronic device 320 and the operation performed in the second electronic device 320, and may determine an ASR error part and/or substitute candidate. For example, "main screen" is determined to be an ASR error part, and "milk music" is determined to be a substitute candidate.

According to various embodiments of the disclosure, the personalized ASR model production module 316 may produce a personalized ASR model of a user by performing machine learning (deep learning) on an ASR model based on the result (e.g., a substitute candidate) of analysis by the data analysis module 313 and user speech data corresponding thereto. The produced personalized ASR model may be stored in the ASR model repository 318a and the ASR module 312 may perform speech recognition by utilizing the stored personalized ASR model.

According to various embodiments of the disclosure, the personalized ASR model production module 316 may personalize (update) an ASR model, based on the result of analysis by the data analysis module 313 and user speech data corresponding thereto. At least one of a hidden Markov model (HMM)-based method, an artificial neural network (ANN)-based method, a support vector machine (SVM)-based method, or a dynamic time warping (DTW)-based method may be used as an ASR method. However, the disclosure is not limited thereto. An ASR model that is referred to may be different depending on an ASR method used. According to an embodiment, deep neural network-hidden Markov model (DNN-HMM) may be used as a recognition method [reference 1: G. E. Dahl, D. Yu, L. Deng, and A. Acero, "Context-dependent pretrained deep neural networks for large-vocabulary speech recognition," Audio, Speech, and Language Processing, IEEE Transactions on, vol. 20, no. 1, pp. 30-42, 2012]. The DNN-HMM-based ASR method performs modeling of an acoustic model (AM) using DNN, and performs modeling of a language model (LM) using HMM.

According to various embodiments of the disclosure, if DNN-HMM is used as a speech recognition algorithm, an AM or an LM may be corrected in order to personalize (update) an ASR model. The method that corrects the AM may be implemented by adding an adaptation layer after the last layer of a neural network used for the AM model [reference 2: S. Mirsamadi, and J. Hansen, "A study on deep neural network acoustic model adaptation for robust far-field speech recognition," INTERSPEECH, page 2430-2434. ISCA, (2015)].

According to various embodiments of the disclosure, there may be the method that corrects the LM in order to personalize an ASR model. Even in the LM, an AR model may be personalized by correcting a pronunciation model (PM) that expresses words in a phoneme sequence (or a senone sequence). As described above, a linguistic expression in DNN-HMM may be implemented as wFST. FST (or finite state acceptor (FSA)) information that expresses pronunciation is updated among FSTs included in the whole LM, and thus, the pronunciation of a predetermined word may be personalized. For example, the FST of a predetermined word in the PM may be corrected or a weight may be applied to the arc of the FST [reference 3: Takaaki Hori, Chiori Hori, Yasuhiro Minami, and Atsushi Nakamura, "Efficient WFST-based one-pass decoding with on-the-fly hypothesis rescoring in extremely large vocabulary continuous speech recognition," IEEE Trans. on Audio, Speech and Lang. Process., vol. 15, no. 4, pp. 1352-1365, 2007].

According to various embodiments of the disclosure, the user interface (UI) module 315 may transmit action planning, produced by the action planner module 317 or selected from the action planning repository 318c, to the second electronic device 320 in response to a user input. The second electronic device 320 may select an application based on the received action planning, and may perform the selected application so as to perform an operation according to the user input.

According to various embodiments of the disclosure, the UI module 315 may determine whether a parameter determined by the NLU module 314 is sufficient for performing an operation associated with the user input. If the parameter is insufficient, the UI module 315 may transfer feedback that requests needed information from a user, to the second electronic device 320.

According to various embodiments of the disclosure, the UI module 315 may control the ASR model production module 316 based on a user reaction to the result of analysis by the data analysis module 313. For example, the UI module 315 may transmit information associated with an ASR error part determined by the data analysis module 313 to the second electronic device 320. The second electronic device 320 may display, on the display, a user interface (UI) for receiving a user reaction to the received information. For example, the UI may include an ASR error part (or utterance including the same) and a substitute candidate (or utterance including the same). In addition, the UI may further include at least one of time information or place information related to an utterance corresponding to the ASR error part, as information for helping a user's understanding. Alternatively, the UI may further include a link for reproducing speech data corresponding to the ASR error part. The second electronic device 320 may reproduce speech data in response to user selection of the link, and may output the same via a speaker. The second electronic device 320 may transmit a user reaction received via the UI to the UI module 315. If the received user reaction means error correction, the UI module 315 may control the personalized ASR model production module 316 so as to produce a personalized ASR model.

According to various embodiments of the disclosure, the UI module 315 may control the ASR model 312 based on a user reaction to the result of analysis by the data analysis module 313. For example, if a received user reaction means error correction, the UI module 315 may control the ASR module 312 so as to perform speech recognition using a personalized ASR model produced by the personalized ASR model production module 316.

According to various embodiments of the disclosure, the UI module 315 may determine whether to store a personalized ASR model in the ASR model repository 318a, based on a user reaction to the result of speech recognition by the ASR module 312 to which the personalized ASR model is applied. For example, the UI module 315 may transmit the result to the second electronic device 320. The UI module 315 may receive a user reaction to the result from the second electronic device 320. If the received user reaction means result acceptance (e.g., if a first speech recognition result to which a personalized ASR model is applied and a second speech recognition result to which an existing ASR model, as opposed to the personalized ASR model, is applied are displayed on a touch screen, and a user gesture of a touch to the first speech recognition result is received), the UI module 315 may store the personalized ASR model in the ASR model repository 318a, and thus, the ASR module 312 is capable of performing speech recognition using the stored personalized ASR model. If the received user reaction means result non-acceptance (e.g., if the second speech recognition result is selected), the UI module 315 may not store the produced personalized ASR model in the ASR model repository 318a, and discards the same. Accordingly, the ASR module 312 to which the personalized ASR model is not applied may perform speech recognition.

According to various embodiments of the disclosure, the second electronic device 320 (e.g., the electronic device 101 of FIG. 1) may include a second processor 321, a display 325, a memory 326, an input device 327, and a speaker 328.

According to various embodiments of the disclosure, the input device 327 (e.g., the input device 150 of FIG. 1) may receive a user input from a user. For example, the input device 327 may include a sensor circuit (e.g., a pressure sensor and a fingerprint sensor) and a touch circuit coupled to the display 325, a microphone, and a hardware key.

According to various embodiments of the disclosure, the input device 327 may receive a user input (e.g., speech data via a headset) via an external device electrically connected to a connection terminal (not illustrated) (e.g., the connection terminal 178 of FIG.1).

According to various embodiments of the disclosure, the display 325 (e.g., a display included in the display device 160 of FIG. 1) may display an image, a video, and/or an execution screen of an application. For example, the display 325 may display a UI for receiving a user reaction to information received from the first electronic device 310. Alternatively, the display 325 may display an execution screen of an application, as the result of an operation performed under control of an execution engine module 323.

According to various embodiments of the disclosure, the speaker 328 (e.g., a speaker included in the acoustic output device 155 of FIG. 1) may output a sound signal. For example, the speaker 328 may convert speech data produced in the first electronic device 310 into a sound signal, and may output the sound signal. Alternatively, the speaker 328 may output a sound signal as the result of an operation performed under control of the execution engine module 323.

According to various embodiments of the disclosure, the memory 326 (e.g., the memory 130 of FIG. 1) may store a plurality of applications. For example, the stored applications may be selected and executed by the execution engine module 323.

According to various embodiments of the disclosure, the second processor 321 may include an intelligent agent 322, the execution engine module 323, and a hint provision module 324.

According to various embodiments of the disclosure, at least one of the intelligent agent 322, the execution engine module 323, and the hint provision module 324 may be configured in the second electronic device 320, as separately prepared hardware, different from the second processor 321.

According to various embodiments of the disclosure, the intelligent agent 322, the execution engine module 323, and the hint provision module 324 may be software stored in the memory 326. Accordingly, the second processor 321 may execute the intelligent agent 322, the execution engine module 323, and the hint provision module 324 so as to perform operations thereof.

According to various embodiments of the disclosure, the intelligent agent 322 may include a wake-up recognition module that recognizes a call from a user. The wake-up recognition module may recognize a wake-up command from a user via a speech recognition module, and if the wake-up command is recognized, the intelligent agent 322 may be activated in order to receive a user input. According to an embodiment, the wake-up recognition module may be implemented in a low-power processor (e.g., a processor included in an audio codec). According to an embodiment, the intelligent agent 322 may be activated according to a user input provided via a hardware key. If the intelligent agent 322 is activated, an intelligent app (e.g., a speech recognition app) interoperating with the intelligent agent 322 may be executed.

According to various embodiments of the disclosure, the intelligent agent 322 may include a speech recognition module for recognizing a user input. The speech recognition module recognizes a user input for enabling an app to perform an operation. For example, the speech recognition module may recognize a limited user input (e.g., utterance, such as "snap", that executes photographing while a camera app is running) that executes an operation, such as the wake-up command, in an app.

According to various embodiments of the disclosure, the speech recognition module of the intelligent agent 322 may recognize a user input, by assisting the ASR module 312 of the first electronic device 310. For example, the speech recognition module may recognize a user command, which may be processible by the second electronic device 320, and quickly process the same.

According to various embodiments of the disclosure, the speech recognition module and the wake-up recognition module of the intelligent agent 322 may recognize a user input using a speech recognition algorithm. The algorithm used for recognizing a speech may be, for example, at least one of a hidden Markov model (HMM), an artificial neural network (ANN), or dynamic time warping (DTW).

According to various embodiments of the disclosure, the intelligent agent 322 may convert user speech data into text data, and may display the text data on the display 325.

According to various embodiments of the disclosure, the intelligent agent 322 may transmit speech data received via the input device 327 to the first electronic device 310. The intelligent agent 322 may receive text data from the first electronic device 310 as the result of processing the speech data, and may display the same on the display 325.

According to various embodiments of the disclosure, the intelligent agent 322 may receive action planning from the first electronic device 310, as the result of processing the speech data. The intelligent agent 322 may transfer the received action planning to the execution engine module 323, and thus, the execution engine module 323 is capable of performing corresponding operations.

According to various embodiments of the disclosure, the intelligent agent 322 may perform speech pre-processing (e.g., speech pre-processing by the UE 210 of FIG. 2), before transmitting speech data to the first electronic device 310. For example, the intelligent agent 322 may include an adaptive echo canceller (AEC) module, a noise suppression (NS) module, an endpoint detection (EPD) module, or an automatic gain control (AGC) module. The AEC module may cancel echos included in the user input. The NS module may suppress background noise included in the user input. The EPD module may detect the end point of user speech included in the user input, so as to detect a part where the user speech is present. The AGC module recognizes the user input and may control the volume of the user input to be appropriate for processing the user input.

According to various embodiments of the disclosure, the execution engine module 323 may receive action planning from the first electronic device 310 via the intelligent agent 322, and may execute a corresponding application so that the application performs corresponding operations.

According to various embodiments of the disclosure, the hint provision module 324 may provide (propose) a hint related to ASR error correction to a user. For example, the hint provision module 324 may receive information related to ASR error part from the first electronic device 310, and may display a UI included in the received information on the display 325.

According to various embodiments of the disclosure, the hint provision module 324 may receive a user reaction to the provided hint from a user via the input device 327, and may transmit the user reaction to the first electronic device 310.

Although not illustrated, the second electronic device 320 may include a communication circuit (e.g., the communication circuit 190 of FIG. 1) for data communication with the first electronic device 310, and the first electronic device 310 may also include a communication circuit (e.g., a communication module that is the same as the communication module 190 of FIG. 1, and performs the same function) for data communication with the second electronic device 320.

FIG. 4 is a flowchart illustrating operations for operating a personalized ASR, according to various embodiments.

Referring to FIG. 4, the operations of FIG. 4 according to the claimed invention are performed by a processor (e.g., the first processor 310 of FIG. 3) of an electronic device.

According to the claimed invention, in operation 410, the processor (e.g., the ASR module 312 of FIG. 3) stores a plurality of pieces of text data, produced by performing speech recognition on user speech data using a predetermined ASR model, together with the speech data in a repository (e.g., the ASR utterance data repository 318d of FIG. 3).

According to the claimed invention, in operation 420, the processor obtains an ASR error part and a substitute candidate from the plurality of pieces of stored text data. For example, the processor (e.g., the data analysis module 313 of FIG. 3) may execute an operation of extracting an ASR error part and a substitute candidate from among pieces of text data of the same user, which are stored in the ASR utterance data repository 318d.

According to the claimed invention, in operation S430, the processor (e.g., the personalized ASR model production module 316 of FIG. 3) produces a personalized ASR model of the user by performing deep learning on the ASR model based on the substitute candidate and user speech data corresponding thereto.

According to the claimed invention, in operation 440, the processor (e.g., the UI module 315 of FIG. 3) receives a user reaction to the ASR error part and the substitute candidate. For example, a display (e.g., the display 325 of FIG. 3) functionally connected to the processor may display a UI including the ASR analysis result (e.g., an ASR error part and a substitute candidate). A user reaction to the displayed ASR analysis result may be transferred to the processor via an input device (e.g., the input device 327 of FIG. 3) functionally connected to the processor.

According to various embodiments of the disclosure, in operation 450, the processor (e.g., the UI module 315) may apply, based on the user reaction, the produced personalized ASR model to ASR. For example, if the user reaction is positive (e.g., if a user input indicating that an ASR analysis result is accepted is transferred to the processor), the processor stores the personalized ASR model in a repository (e.g., the ASR model repository 318a of FIG. 3) so that the ASR module (e.g., the ASR module 312 of FIG. 3) is capable of performing speech recognition using the personalized ASR model stored in the repository.

FIG. 5 is a flowchart illustrating operations for analyzing a speech recognition result according to various embodiments.

Referring to FIG. 5, the operations (e.g., operation 420 of FIG. 4) of FIG. 5 according to the claimed invention are performed by a processor (e.g., the first processor 310 or the data analysis module 313 of FIG. 3) of an electronic device.

According to the claimed invention, in operation 510, the processor groups pieces of utterance data, which are produced consecutively during a predetermined period of time, among the plurality of pieces of utterance data stored in the utterance data repository, into a single utterance group. Moreover, for example, the method that performs grouping may be performed based on an utterance that is made in a predetermined place, an utterance that is made in a predetermined context, an utterance that is made in a predetermined location, and the like. For example, with reference to Table 1, utterance IDs #6, #7, and #8, which are produced consecutively within one minute, among utterance data of speaker A, may be grouped into a single utterance group.

According to various embodiments of the disclosure, in operation 520, the processor may exclude (filter out) one or more pieces of utterance data that satisfy a predetermined exceptional condition from the utterance group. For example, text data which are linguistically the same may be excluded from the utterance group. As another example, text data having a difference in only the locations of words is classified as the same text data and may be excluded from the utterance group.

As another example, text data having a difference in only contraction, as shown below, is classified as the same text data and may be excluded from the utterance group.
* You are so great
* You're so great

As another example, text data having a difference in only a word that is frequently used and means the opposite, such as on/off and the like, as shown below, is classified as an exceptional case, and may be excluded from the utterance group.
* Turn on flashlight
* Turn off flashlight

As another example, text data having a difference in only numbers used, as shown below, is classified as an exceptional case and may be excluded from the utterance group.
* Please call to 12345
* Please call to 55644-124

As another example, text data to which some words are added, as shown below, is classified as an exceptional case and may be excluded from the utterance group.
* open WhatsApp and share latest video to pushups
* open WhatsApp and share latest video to pushups group

According to the claimed invention, in operation 530, the processor selects a pair of pieces of similar utterance data from the utterance group. According to an embodiment, the processor may calculate similarity among pieces of utterance data using an algorithm such as soundex, double metaphone, and the like. According to the claimed invention, the processor selects a pair of pieces of utterance data having a similarity greater than a predetermined threshold as similar utterance data. For example, in the utterance group including utterance IDs #6, 7, and 8, the processor may select ID#6 and ID#7, which have a difference in only a single word, as a pair of similar utterance data.

According to various embodiments of the disclosure, the soundex algorithm may assign the same code value to English names having similar pronunciation. For example, in the case of "smith" and "smyth", they have a difference in spelling but have the same pronunciation, and thus, the same code value (e.g., S530) may be assigned. For example, in the case of English characters, the first character may be included in a result value unconditionally. If a, e, h, i, o, u, w, or y comes as the second character, the algorithm disregards the same, and proceeds with a subsequent character. Subsequently, a character may be replaced with a code value, with reference to a table such as Table 3 as shown below. The corresponding table may be obtained based on the shape of a mouth during pronouncing. In the case in which the same value appears successively at least two times among the replaced values, if a previous character is a letter included in the table, it may be disregarded. If they are not consecutive letters, they may be included in a result value. A result value corresponding to a total of 4 letters may be obtained. If letters are insufficient, "0" may be filled in the result value.

**[Table 3]**

| Characters | Code value |
|---|---|
| b, f, p, v | 1 |
| c, g, j, k, q, s, x, z | 2 |
| d, t | 3 |
| l | 4 |
| m, n | 5 |
| r | 6 |

According to various embodiments of the disclosure, the double metaphone algorithm may use more various speech codes based on a method of converting spelling into a speech code, such as the soundex algorithm, and may return a maximum of two candidates for vague pronunciation.

According to the claimed invention, in operation 540, the processor extracts a difference between the pair of pieces of similar utterance data, wherein the difference comprises a pair of words. For example, a pair of words "log" and "lock" may be extracted as the difference between utterance ID #6 and utterance ID #7.

According to the claimed invention, in operation 550, the processor determines a substitute candidate based on the extracted difference. For example, the processor may determine that "lock" is a word (substitute candidate) that a user utters and "log" is an ASR error part in the pair of words.

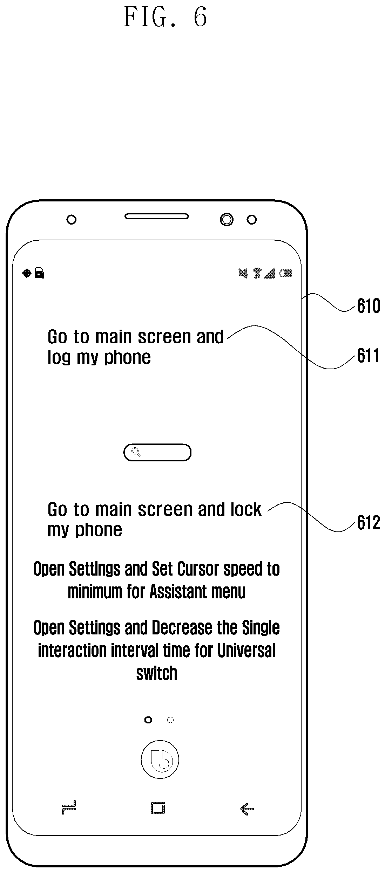

FIG. 6 is a diagram illustrating a user interface (UI) for receiving a user reaction to an ASR error analysis result according to various embodiments.

Referring to FIG. 6, a processor (e.g., the first processor 310 of FIG. 3) according to various embodiments of the disclosure may provide a UI 610 to a user via a display (e.g., the display 325 of FIG. 3) functionally connected to the processor. For example, the processor may display first text data 611 in the upper part of the UI 610, as the result of ASR, and may display second text data 612, which is a hint (a substitute candidate) to replace the first text data 311, in the lower part of the UI 610, as the result of ASR error analysis. A user reaction (e.g., a touch input of a user to data displayed on a touch screen) to the first text data 611 or the second text data 612 may be transferred to the processor via an input device (e.g., the input device 327 of FIG. 3) functionally connected to the processor. If the user reaction selects the first text data 611, the processor may produce action planning corresponding to the first text data 611. If the user reaction selects the second text data 612, the processor may produce action planning corresponding to the second text data 612, and may operate a personalized ASR using the second text data 612.

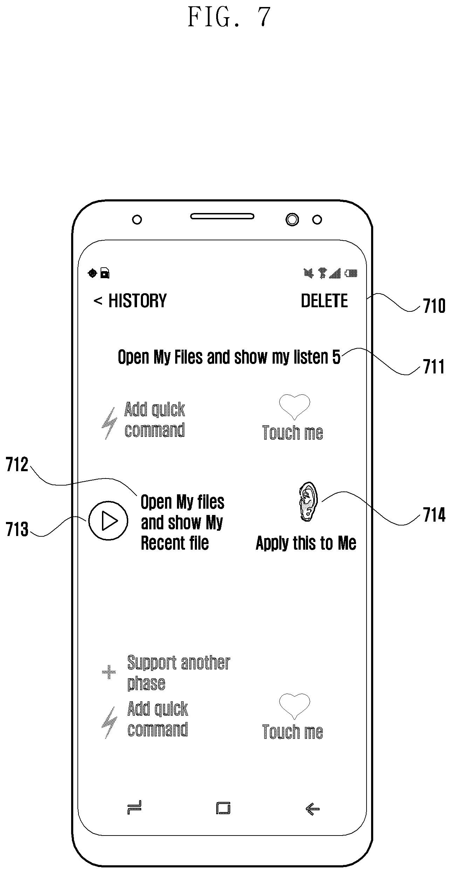

FIG. 7 is a diagram illustrating a user interface (UI) for receiving a user reaction to an ASR error analysis result according to various embodiments.

Referring to FIG. 7, a processor (e.g., the first processor 310 of FIG. 3) according to various embodiments of the disclosure may display first text data 711 via a UI 710 as the result of ASR, and may display second text data 712 via the UI 710 as the result of ASR error analysis. For example, the processor may provide the result of ASR, "open my files and show my listen 5" among voice assistant history, to a user via the UI 710. The processor may provide text data, "open my files and show my recent file", which is corrected via ASR error analysis, to the user via the UI 710.

According to various embodiments of the disclosure, the processor may display, via the UI 710, a reproduction icon 713 for reproducing user speech data to which ASR is to be performed. If the reproduction icon 713 is selected by the user via an input device, the processor may output a corresponding sound signal via a speaker.

According to various embodiments of the disclosure, the processor may display, via the UI 710, a personalization application icon 714 (e.g., an icon that reads, "apply this to me") for receiving a user reaction to the result of ASR error analysis. If the personalization application icon 714 is selected by a user via the input device, the user reaction meaning that the ASR error analysis is accepted is transferred to the processor, and the processor may operate a personalized ASR.

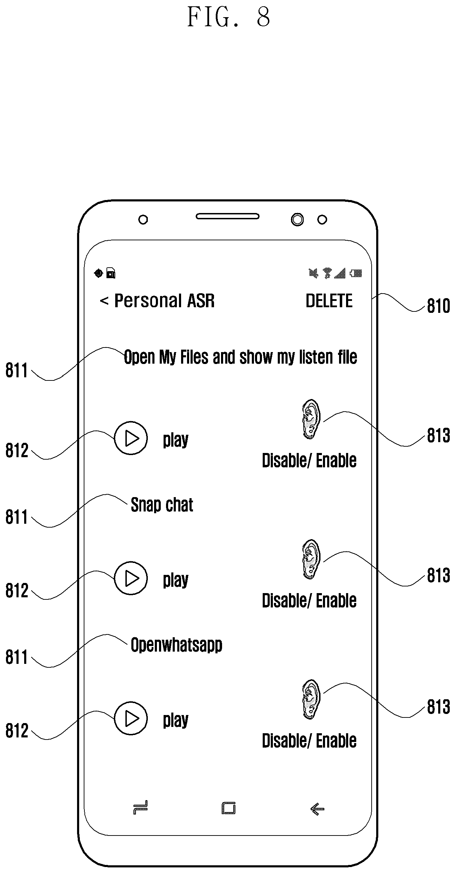

FIG. 8 is a diagram illustrating a user interface (UI) for receiving a user reaction to an ASR error analysis result according to various embodiments.

Referring to FIG. 8, a processor (e.g., the first processor 310 of FIG. 3) according to various embodiments of the disclosure may display, via a UI 810, text data 811 corrected via ASR error analysis among voice assistant history of a user, together with an icon 812 for reproducing a corresponding speech, and an icon 813 for enabling the user to select whether to apply a personalized ASR. For example, the processor may display a corrected word among words in the user utterance. Alternatively, the processor may display the entirety of a corresponding sentence including a corrected word.

According to various embodiments of the disclosure, user utterance-based ASR personalization may be performed with respect to a predetermined group of persons, as opposed to a predetermined person. For example, the processor (e.g., the first processor 310 of FIG. 3) may collect utterance data from all users who use a predetermined speech service, and may perform ASR error analysis on the collected utterance data, so as to estimate an utterance that is converted into text, different from a user intention, and how frequently the erroneous conversion occurs. Table 4 below shows an example of collected words of users which are estimated to be ASR errors, together with the frequency of occurrence. As shown in Table 4, the processor may extract a predetermined word that is erroneously recognized as a different word with a high probability. The processor may recognize that an ASR error occurs in association with the predetermined word, as opposed to an individual. Therefore, by improving ASR in association with a word for which an ASR error frequently occurs, the corresponding word is recognized well. As a group from which a corresponding utterance is collected, all users may be considered. Further, various types of groups, such as a region-based group, a time-based group, an age-based group, and the like, may be also considered. Accordingly, by changing a word used in a predetermined region into predetermined text, or the like, the ASR operation may be improved.

**[Table 4]**

| Rank | Correct Word | count | Mis-Pronounced Words (count) |
|---|---|---|---|
| 1 | snapchat | 555 | snapshot(549), snapshotted(1), snaps at(1), subject(1), slapshot(1), stop shot(1), snap said(1) |
| 2 | lock | 263 | log(105), look(97), like(28), love(20), locks(2), let(2), luck(1), lockett(1), lot(1), lac(1), lax(1), lack(1), lucky(1), loke(1), oak(1) |
| 3 | whatsapp | 202 | what's up(178), watch app(4), horse app(2), what's at(2), the this(1), watts app(1), what set(1), wide sep(1), what is up(1), what's of(1), watch shot(1), what's hot(1), what's the(1), water(1), woodchuck(1), what apps(1), whtsapp(1), what's i'm(1), woodson(1), what's off(1) |
| 4 | bixby | 197 | big b(21), big be(13), bixi(7), biggs by(6), big's be(4), big(4), big the(4), biggs b(4), picks p(4), biccy(3), pics p(3), back(3), six p(3), big me(3), big pay(3), bucks be(3), pics by(3), big bay(3), rigsby(2), digsby(2), bxb(2), bagsby(2), big see(2), biggs de(2), pics be(2), bixley(2), fix be(2), dicks be(2), bicks be(2), busy(2), back bay(2), bixby's(2), big big(2), big d(2), bucks by(2), baxby(2), bass be(2), ... |
| 5 | snap chat | 156 | snapshot(156) |
| 6 | app | 144 | up(88), at(20), apps(7), ab(5), web(4), a(2), of(2), add(2), apple(1), have(1), up a(1), applet(1), app's(1), off(1), hope(1), a p k(1), a by(1), ep(1), happy(1), i have(1), tap(1), map(1) |
| 7 | sing | 119 | sync(59), saying(17), send(12), think(6), singh(4), sings(4), thing(3), sang(2), saint(2), song(2), bing(2), xing(1), ring(1), seen(1), sync a(1), change(1), ching(1) |
| 8 | fuck | 102 | fucky(62), fuckeh(9), fucko(6), focke(4), fucks(4), fucki(3), fack(3), faq(3), buck(2), back(2), fuk(1), fak(1), fug(1), kiss(1) |
| 9 | mom | 100 | mum(49), mama(17), mommy(9), mamma(5), nine(2), memo(2), mammi(2), nam(2), mommy o(1), i'm(1), month(1), mam(1), miss you(1), men(1), my(1), mahm(1), my me(1), man(1), mummy(1), mami(1) |
| 10 | off | 88 | of(80), app(3), or(2), have(2), wife(1) |

## Claims

1. An electronic device (101), comprising:
a processor (120); and
a memory (130) electrically connected to the processor,
wherein the memory stores instructions which, when being executed by the processor, cause the processor to:
store (410) a plurality of pieces of text data, produced by recognizing user speech data using a predetermined automatic speech recognition, ASR, model, together with the speech data as a piece of utterance data in an utterance data repository functionally connected to the processor;
obtain (420) an ASR error part and a substitute candidate to replace the ASR error part from the plurality of pieces of text data stored in the utterance data repository, wherein the instructions, when being executed by the processor, further cause the processor to:
group (510) pieces of utterance data, which are produced consecutively during a predetermined period of time, among the plurality of pieces of utterance data stored in the utterance data repository, into a single utterance group;
select (530) a pair of pieces of similar utterance data in the utterance group;
extract (540) a difference between the pair of the pieces of similar utterance data, wherein the difference comprises a pair of words; and
obtain (550) a word, produced later in time than the other in the pair of the words to be the substitute candidate based on the difference;
perform (430), based on the substitute candidate and user speech data corresponding to the substitute candidate, deep learning on the ASR model so as to produce a personalized ASR model;
receive (440) a user reaction with respect to the ASR error part and the substitute candidate via an input device functionally connected to the processor; and
update (450), based on the user reaction, the ASR model to the personalized ASR model.

2. The electronic device (101) as claimed in claim 1, wherein the instructions, when being executed by the processor, further cause the processor (120) to display the candidate together with the ASR error part, on a display (160) functionally connected to the processor.

3. The electronic device (101) as claimed in claim 2, wherein the instructions, when being executed by the processor, further cause the processor (120) to further display, on the display (160), metadata that describes utterance data corresponding to the ASR error part, and
wherein the metadata includes time and location information related to the utterance data corresponding to the ASR error part.

4. The electronic device (101) as claimed in claim 2, wherein the instructions, when being executed by the processor, further cause the processor (120) to further display, on the display, link information for reproducing speech data corresponding to the ASR error part.

5. The electronic device (101) as claimed in claim 2, wherein the instructions, when being executed by the processor, further the processor (120) to:
perform ASR using the personalized ASR model if the user reaction is positive to the displayed candidate; and
exclude the candidate from a group of candidates for replacing the ASR error part if the user reaction is negative to the candidate.

6. The electronic device (101) as claimed in claim 1, wherein the instructions, when being executed by the processor, further cause the processor (120) to exclude (520), from the utterance group, one or more pieces of utterance data that satisfy a predetermined exceptional condition in the utterance group.

7. The electronic device (101) as claimed in claim 6, wherein text data which is linguistically the same in the utterance group, text data having a difference in only locations of words, text data having a difference in only contraction, or text data having a difference in only a word that means an opposite is classified as text data that satisfies the exceptional condition, and the text data is excluded from the utterance group.

8. The electronic device (101) as claimed in claim 1, wherein, if an operation performed according to a user input is determined to be irrelevant to the candidate, the instructions, when being executed by the processor, further cause the processor (120) to obtain, based on the above-mentioned operation, a second ASR error part and a second candidate to replace the second ASR error part.

9. A method of operating an electronic device, the method comprising:
storing (410) a plurality of pieces of text data, produced by recognizing user speech data using a predetermined automatic speech recognition, ASR, model, together with the speech data as a piece of utterance data in an utterance data repository;
obtaining (420) an ASR error part and a substitute candidate to replace the ASR error part from among the plurality of pieces of text data stored in the utterance data repository, comprising:
grouping (510) pieces of utterance data, which are produced consecutively during a predetermined period of time, among the plurality of pieces of utterance data stored in the utterance data repository, into a single utterance group;
selecting (530) a pair of pieces of similar utterance data in the utterance group;
extracting (540) a difference between the pair of the pieces of similar utterance data, wherein the difference comprises a pair of words; and
obtaining a word (550), produced later in time than the other in the pair of the words to be the candidate based on the difference;
producing (430), based on the substitute candidate and user speech data corresponding to the substitute candidate, a personalized ASR model by performing deep learning on the ASR model;
receiving (440) a user reaction with respect to the ASR error part and the substitute candidate; and
updating (450), based on the user reaction, the ASR model to the personalized ASR model.

## Patentansprüche

1. Elektronische Vorrichtung (101), die Folgendes umfasst:
einen Prozessor (120); und
einen Speicher (130), der mit dem Prozessor elektrisch verbunden ist;
wobei in dem Speicher Anweisungen gespeichert sind, die bei Ausführung durch den Prozessor den Prozessor zu Folgendem veranlassen:
Speichern (410) einer Vielzahl von Textdatenelementen, die durch Erkennen von Benutzersprachdaten unter Verwendung eines vorbestimmten automatischen Spracherkennungsmodells (ASR-Modell, Automatic Speech Recognition) erzeugt wurden, zusammen mit den Sprachdaten als ein Äußerungsdatenelement in einem Äußerungsdaten-Speicherort, der funktional mit dem Prozessor verbunden ist;
Erhalten (420) eines ASR-Fehlerteils und eines Ersatzkandidaten zum Ersetzen des ASR-Fehlerteils aus der Vielzahl von Textdatenelementen, die in dem Äußerungsdaten-Speicherort gespeichert sind, wobei die Anweisungen, wenn sie von dem Prozessor ausgeführt werden, den Prozessor ferner zu Folgendem veranlassen:
Gruppieren (510) von Äußerungsdatenelementen, die während eines vorbestimmten Zeitraums nacheinander erzeugt werden, unter der Vielzahl von Äußerungsdatenelementen, die in dem Äußerungsdaten-Speicherort gespeichert sind, zu einer einzigen Äußerungsgruppe;
Auswählen (530) eines Paares ähnlicher Äußerungsdatenelemente in der Äußerungsgruppe;
Extrahieren (540) eines Unterschieds zwischen dem Paar ähnlicher Äußerungsdatenelemente, wobei der Unterschied ein Wortpaar umfasst; und
Erhalten (550) eines Wortes als Ersatzkandidat, das zeitlich später als das andere in dem Wortpaar erzeugt wurde, basierend auf dem Unterschied;
Durchführen von Deep Learning an dem ASR-Modell auf der Basis des Ersatzkandidaten und der dem Ersatzkandidaten entsprechenden Benutzersprachdaten, um ein personalisiertes ASR-Modell zu erzeugen;
Empfangen (440) einer Benutzerreaktion in Bezug auf den ASR-Fehlerteil und den Ersatzkandidaten über eine Eingabevorrichtung, die funktional mit dem Prozessor verbunden ist; und
Aktualisieren (450) des ASR-Modells auf das personalisierte ASR-Modell basierend auf der Benutzerreaktion.

2. Elektronische Vorrichtung (101) nach Anspruch 1, wobei die Anweisungen, wenn sie von dem Prozessor ausgeführt werden, ferner bewirken, dass der Prozessor (120) den Kandidaten zusammen mit dem ASR-Fehlerteil auf einer Anzeige (160) anzeigt, die funktional mit dem Prozessor verbunden ist.

3. Elektronische Vorrichtung (101) nach Anspruch 2, wobei die Anweisungen, wenn sie von dem Prozessor ausgeführt werden, ferner bewirken, dass der Prozessor (120) ferner auf der Anzeige (160) Metadaten anzeigt, die dem ASR-Fehlerteil entsprechende Äußerungsdaten beschreiben, und
wobei die Metadaten Zeit- und Standortinformationen enthalten, die sich auf die dem ASR-Fehlerteil entsprechenden Äußerungsdaten beziehen.

4. Elektronische Vorrichtung (101) nach Anspruch 2, wobei die Anweisungen, wenn sie von dem Prozessor ausgeführt werden, ferner bewirken, dass der Prozessor (120) ferner auf der Anzeige Linkinformationen zum Reproduzieren von dem ASR-Fehlerteil entsprechenden Sprachdaten anzeigt.

5. Elektronische Vorrichtung (101) nach Anspruch 2, wobei die Anweisungen, wenn sie von dem Prozessor ausgeführt werden, den Prozessor (120) ferner zu Folgendem veranlassen:
Durchführen von ASR unter Verwendung des personalisierten ASR-Modells, wenn die Benutzerreaktion auf den angezeigten Kandidaten positiv ist; und
Ausschließen des Kandidaten aus einer Gruppe von Kandidaten zum Ersetzen des ASR-Fehlerteils, wenn die Benutzerreaktion auf den Kandidaten negativ ist.

6. Elektronische Vorrichtung (101) nach Anspruch 1, wobei die Anweisungen, wenn sie von dem Prozessor ausgeführt werden, ferner den Prozessor (120) veranlassen, aus der Äußerungsgruppe ein oder mehrere Äußerungsdatenelemente auszuschließen (520), die eine vorbestimmte außergewöhnliche Bedingung in der Äußerungsgruppe erfüllen.

7. Elektronische Vorrichtung (101) nach Anspruch 6, wobei Textdaten in der Äußerungsgruppe, die sprachlich gleich sind, Textdaten, die einen Unterschied nur in den Standorten von Wörtern aufweisen, Textdaten, die einen Unterschied nur in der Kontraktion aufweisen, oder Textdaten, die einen Unterschied nur in einem Wort aufweisen, das ein Gegenteil bedeutet, als Textdaten klassifiziert werden, die die Ausnahmebedingung erfüllen, und die Textdaten werden aus der Äußerungsgruppe ausgeschlossen.

8. Elektronische Vorrichtung (101) nach Anspruch 1, wobei, wenn eine gemäß einer Benutzereingabe durchgeführte Operation als irrelevant für den Kandidaten bestimmt wird, die Anweisungen, wenn sie von dem Prozessor ausgeführt werden, ferner den Prozessor (120) veranlassen, basierend auf der oben genannten Operation einen zweiten ASR-Fehlerteil und einen zweiten Kandidaten zu erhalten, um den zweiten ASR-Fehlerteil zu ersetzen.

9. Verfahren zum Betrieb einer elektronischen Vorrichtung, wobei das Verfahren Folgendes umfasst:
Speichern (410) einer Vielzahl von Textdatenelementen, die durch Erkennen von Benutzersprachdaten unter Verwendung eines vorbestimmten automatischen Spracherkennungsmodells (ASR-Modell, Automatic Speech Recognition) erzeugt wurden, zusammen mit den Sprachdaten als ein Äußerungsdatenelement in einem Äußerungsdaten-Speicherort;
Erhalten (420) eines ASR-Fehlerteils und eines Ersatzkandidaten zum Ersetzen des ASR-Fehlerteils aus der Vielzahl von Textdatenelementen, die in dem Äußerungsdaten-Speicherort gespeichert sind, umfassend:
Gruppieren (510) von Äußerungsdatenelementen, die während eines vorbestimmten Zeitraums nacheinander erzeugt werden, unter der Vielzahl von Äußerungsdatenelementen, die in dem Äußerungsdaten-Speicherort gespeichert sind, zu einer einzigen Äußerungsgruppe;
Auswählen (530) eines Paares ähnlicher Äußerungsdatenelemente in der Äußerungsgruppe;
Extrahieren (540) eines Unterschieds zwischen dem Paar ähnlicher Äußerungsdaten, wobei der Unterschied ein Wortpaar umfasst; und
Erhalten (550) eines Wortes als Kandidat, das zeitlich später als das andere in dem Wortpaar erzeugt wurde, basierend auf dem Unterschied;
Erzeugen (430) eines personalisierten ASR-Modells basierend auf dem Ersatzkandidaten und den dem Ersatzkandidaten entsprechenden Benutzersprachdaten durch Durchführen von Deep Learning an dem ASR-Modell;
Empfangen (440) einer Benutzerreaktion in Bezug auf den ASR-Fehlerteil und den Ersatzkandidaten; und
Aktualisieren (450) des ASR-Modells auf das personalisierte ASR-Modell basierend auf der Benutzerreaktion.

## Revendications

1. Appareil électronique (101), comprenant :
un processeur (120), et
une mémoire (130) reliée électriquement au processeur ;
ladite mémoire contenant des instructions qui, lorsqu'elles sont exécutées par le processeur, amènent le processeur à :
stocker (410) une pluralité d'éléments de données textuelles, produits par reconnaissance de données vocales d'utilisateur à l'aide d'un modèle prédéterminé de reconnaissance automatique de la parole (ASR, automatic speech recognition), conjointement avec les données vocales sous la forme d'élément de données d'énoncé dans un référentiel de données d'énoncé relié fonctionnellement au processeur ;
obtenir (420) une partie d'erreur ASR et un candidat de substitution destiné à remplacer la partie d'erreur ASR à partir de la pluralité d'éléments de données textuelles stockés dans le référentiel de données d'énoncé ; lesdites instructions, lorsqu'elles sont exécutées par le processeur, amenant en outre le processeur à :
regrouper (510) ceux des éléments de données d'énoncé qui sont produits consécutivement pendant une période prédéterminée, parmi la pluralité d'éléments de données d'énoncé stockés dans le référentiel de données d'énoncé, en un même groupe d'énoncés,
sélectionner (530) une paire d'éléments de données d'énoncé similaires dans le groupe d'énoncés,
extraire (540) une différence au sein de la paire d'éléments de données d'énoncé similaires, la différence comprenant une paire de mots, et
obtenir (550) un mot, produit plus tard que l'autre mot de la paire de mots, servant de candidat de substitution en fonction de la différence ;
réaliser (430), compte tenu du candidat de substitution et des données vocales d'utilisateur correspondant au candidat de substitution, un apprentissage profond sur le modèle ASR afin de produire un modèle ASR personnalisé ;
recevoir (440) une réaction de l'utilisateur vis-à-vis de la partie d'erreur ASR et du candidat de substitution par le biais d'un périphérique d'entrée relié fonctionnellement au processeur ; et
en fonction de la réaction de l'utilisateur, actualiser (450) le modèle ASR pour donner lieu au modèle ASR personnalisé.

2. Appareil électronique (101) selon la revendication 1, dans lequel les instructions, lorsqu'elles sont exécutées par le processeur, amènent en outre le processeur (120) à afficher le candidat conjointement avec la partie d'erreur ASR, sur un écran (160) relié fonctionnellement au processeur.

3. Appareil électronique (101) selon la revendication 2, dans lequel les instructions, lorsqu'elles sont exécutées par le processeur, amènent en outre le processeur (120) à afficher, sur l'écran (160), des métadonnées décrivant des données d'énoncé correspondant à la partie d'erreur ASR, et
dans lequel les métadonnées comprennent des informations de temps et de lieu liées aux données d'énoncé correspondant à la partie d'erreur ASR.

4. Appareil électronique (101) selon la revendication 2, dans lequel les instructions, lorsqu'elles sont exécutées par le processeur, amènent en outre le processeur (120) à afficher en outre, sur l'écran, des informations de lien visant à reproduire les données vocales correspondant à la partie d'erreur ASR.

5. Appareil électronique (101) selon la revendication 2, dans lequel les instructions, lorsqu'elles sont exécutées par le processeur, amènent en outre le processeur (120) à :
réaliser l'ASR au moyen du modèle ASR personnalisé si la réaction de l'utilisateur vis-à-vis du candidat affiché est positive, et
exclure le candidat d'un groupe de candidats de remplacement de la partie d'erreur ASR si la réaction de l'utilisateur vis-à-vis du candidat est négative.

6. Appareil électronique (101) selon la revendication 1, dans lequel les instructions, lorsqu'elles sont exécutées par le processeur, amènent en outre le processeur (120) à exclure (520) du groupe d'énoncés un ou plusieurs éléments de données d'énoncé qui répondent à une condition exceptionnelle prédéterminée dans le groupe d'énoncés.

7. Appareil électronique (101) selon la revendication 6, dans lequel des données de texte qui sont linguistiquement les mêmes dans le groupe d'énoncés, des données de texte ayant uniquement une différence concernant l'emplacement des mots, des données de texte ayant uniquement une différence de contraction, ou des données de texte ayant uniquement une différence concernant un mot signifiant un contraire sont classées comme données de texte qui répondent à la condition exceptionnelle, et les données de texte sont exclues du groupe d'énoncés.

8. Appareil électronique (101) selon la revendication 1, dans lequel, si une opération effectuée selon une entrée utilisateur est déterminée comme n'étant pas pertinente pour le candidat, les instructions, lorsqu'elles sont exécutées par le processeur, amènent en outre le processeur (120) à obtenir, compte tenu de l'opération mentionnée ci-dessus, une deuxième partie d'erreur ASR et un deuxième candidat destiné à remplacer la deuxième partie d'erreur ASR.

9. Procédé d'exploitation d'un appareil électronique, le procédé comprenant les étapes consistant à :
stocker (410) une pluralité d'éléments de données textuelles, produits par reconnaissance de données vocales d'utilisateur à l'aide d'un modèle prédéterminé de reconnaissance automatique de la parole (ASR, automatic speech recognition), conjointement avec les données vocales sous la forme d'élément de données d'énoncé dans un référentiel de données d'énoncé ;
obtenir (420) une partie d'erreur ASR et un candidat de substitution destiné à remplacer la partie d'erreur ASR à partir de la pluralité d'éléments de données textuelles stockés dans le référentiel de données d'énoncé, ce qui comprend les opérations consistant à :
regrouper (510) ceux des éléments de données d'énoncé qui sont produits consécutivement pendant une période prédéterminée, parmi la pluralité d'éléments de données d'énoncé stockés dans le référentiel de données d'énoncé, en un même groupe d'énoncés,
sélectionner (530) une paire d'éléments de données d'énoncé similaires dans le groupe d'énoncés,
extraire (540) une différence au sein de la paire d'éléments de données d'énoncé similaires, la différence comprenant une paire de mots, et
obtenir un mot (550), produit plus tard que l'autre mot de la paire de mots, servant de candidat en fonction de la différence ;
produire (430), compte tenu du candidat de substitution et des données vocales d'utilisateur correspondant au candidat de substitution, un modèle ASR personnalisé par réalisation d'un apprentissage profond sur le modèle ASR ;
recevoir (440) une réaction de l'utilisateur vis-à-vis de la partie d'erreur ASR et du candidat de substitution ; et
en fonction de la réaction de l'utilisateur, actualiser (450) le modèle ASR pour donner lieu au modèle ASR personnalisé.
